# EUROPEAN PATENT APPLICATION

(11) **EP 4 763 333 A1**
(43) Date of publication of application: **24.06.2026**
(21) Application number: 24222408.7
(22) Date of filing: 20.12.2024
(51) Int. Cl.: B01J 29/72, B01D 53/94, B01J 37/00

(54) **A SELECTIVE CATALYTIC REDUCTION CATALYST**

(71) Applicant: Johnson Matthey Public Limited Company, London EC2V 7AD (GB)
(72) Inventor: COLLIER, Jillian, Sonning Common, RG4 9NH (GB); GEORGIEVA, Veselina Mihaylova, Reading, RG4 9NH (GB); HARRIS, Matthew Eben, Royston, SG8 5HE (GB); MANTAROSIE, Loredana, Reading, RG4 9NH (GB); PHILLIPS, Paul Richard, Royston, SG8 5HE (GB); RUGGERI, Maria Pia, Reading, RG4 9NH (GB); VILLAMAINA, Roberta, Reading, RG4 9NH (GB)
(74) Representative: Johnson Matthey Public Limited Company

(57) **Abstract**

This invention relates to selective catalytic reduction (SCR) catalysts with improved tolerance towards sulfation. The invention further extends to the use of such catalysts in emission treatment systems. More specifically, the invention is related to a catalyst for treating an exhaust gas comprising NOx, said catalyst comprising a metal loaded zeolite and a silica-alumina or titania-alumina binder.

## Description

### FIELD OF THE INVENTION

This invention relates to selective catalytic reduction (SCR) catalysts with improved tolerance towards sulfation. The invention further extends to the use of such catalysts in emission treatment systems.

### BACKGROUND TO THE INVENTION

Hydrocarbon combustion in diesel engines, stationary gas turbines, and other systems generates exhaust gas that must be treated to remove nitrogen oxides (NOₓ), which comprises NO (nitric oxide) and NO₂ (nitrogen dioxide), with NO being the majority of the NOₓ formed. NOₓ is known to cause a number of health issues in people as well as causing a number of detrimental environmental effects including the formation of smog and acid rain. To mitigate both the human and environmental impact from NOx in exhaust gas, it is desirable to eliminate these undesirable components, preferably by a process that does not generate other noxious or toxic substances.

Exhaust gas generated in lean-burn and diesel engines is generally oxidative. NOₓ needs to be reduced selectively with a catalyst and a reductant in a process known as selective catalytic reduction (SCR) that converts NOx into elemental nitrogen (N2) and water.

In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the NOₓ is reduced as the gases pass through or over the catalyzed substrate.

In order to maximize the conversion of NOₓ, it is often necessary to add more than a stoichiometric amount of ammonia (NH₃) to the gas stream. However, release of the excess ammonia into the atmosphere would be detrimental to the health of people and to the environment. In addition, ammonia is caustic, especially in its aqueous form. Condensation of ammonia and water in regions of the exhaust line downstream of the exhaust catalysts can result in a corrosive mixture that can damage the exhaust system. Therefore, the release of ammonia in exhaust gas should be eliminated. In many conventional exhaust systems, an ammonia oxidation catalyst (also known as an ammonia slip catalyst or "ASC") is installed downstream of the SCR catalyst to remove ammonia from the exhaust gas by converting it to nitrogen. The use of ammonia slip catalysts can allow for NOₓ conversions of greater than 90% over a typical diesel driving cycle.

There is a further problem in treating exhaust emissions. These often contain SOₓ and the SCR catalysts may undergo sulfation when sulfur oxides (such as SO₂ and SO₃) in the exhaust gas interact with active catalytic sites, especially in the presence of water. This reaction forms metal sulfates on the catalyst surface which inhibit the reduction of nitrogen oxides (NOₓ) by ammonia (NH₃). It can also lower the catalyst's thermal stability and lead to increased SO₃ formation, which can cause downstream corrosion.

It is not only SCR catalysts that suffer from sulfation. ASC catalysts can also suffer from sulfation since sulfur can react with catalytic metals or oxides, such as platinum or palladium forming sulfates. As a result, sulfation in ASC catalysts affects their ability to oxidize ammonia, leading to increased ammonia slip and reduced efficiency in converting ammonia into nitrogen and water.

An additional problem is that with washcoated catalytic formulations comprising alumina, the alumina can act as a sulfur reservoir during regeneration processes, with alumina sulfate forming on the alumina binder used in the catalytic formulation. This in turn negatively impacts metal loaded sights of zeolites, such as copper-zeolite, which in turn impact upon the activity of these sites.

The inventors have surprisingly found that the use of silica-alumina binders can least partially, if not substantially, overcome the deleterious effects of sulfation on an SCR/ASC catalyst.

### DETAILED DESCRIPTION

According to the present invention there is provided a catalyst for treating an exhaust gas comprising one or more of SOₓ, NOₓ, and/or ammonia, said catalyst comprising (e.g. consisting essentially of or consisting of) a metal-loaded zeolite and either a silica-alumina binder or a titania-alumina binder.

The metal-loaded zeolite and the silica alumina or titania alumina binder can be provided, in slurry form, on a substrate, as a washcoat, which is dried and/or calcined to affix the catalyst to the substrate. Wash coating may be carried out according to well known processes in the art.

The metal-loaded zeolite of the invention may comprise a small pore zeolite (e.g. a zeolite having a maximum ring size of eight tetrahedral atoms), a medium pore zeolite (e.g. a zeolite having a maximum ring size of ten tetrahedral atoms) or a large pore zeolite (e.g. a zeolite having a maximum ring size of twelve tetrahedral atoms) or a combination of two or more thereof.

When the zeolite is a small pore zeolite, then the small pore zeolite may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or an intergrowth of two or more thereof. Preferably, the small pore zeolite has a framework structure selected from the group consisting of CHA, LEV, AEI, AFX, ERI, LTA, SFW, KFI, DDR and ITE.

When the zeolite is a medium pore zeolite, then the medium pore zeolite may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore zeolite has a framework structure selected from the group consisting of FER, MEL, MFI, and STT.

When the zeolite is a large pore zeolite, then the large pore zeolite may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. Preferably, the large pore zeolite has a framework structure selected from the group consisting of AFI, BEA, MAZ, MOR, and OFF.

In an embodiment of the invention, the metal-loaded zeolite has a framework type selected from AEI, AFX, CHA, DDR, ERI, ITE, KFI, LEV, SFW, BEA, MFI and FER, and mixtures and/or intergrowths thereof. Preferably, the zeolite has a framework type selected from CHA, AEI or AFX, or ERI, more preferably selected from CHA or AEI.

Small and medium pore zeolites, especially small pore zeolites, are preferred for use in SCR catalysts, since they may, for example, provide improved SCR performance and/or improved hydrocarbon tolerance.

In a preferred form of the invention, the zeolite of the invention is a small pore zeolite, e.g. CHA.

In a preferred form of the invention, the zeolite has a silica-to-alumina ratio of 10 to 30, preferably from 13 to 25 or from 12 to 20, e.g. from 13 to 18 or from 20 to 25.

The zeolite of the present invention is a metal loaded zeolite. Examples of metal-loaded zeolites include iron-, copper- and palladium-loaded zeolites. In a preferred embodiment, the metal loaded zeolite has a metal selected from the group comprising cobalt, copper, iron, cerium, manganese, nickel, palladium, platinum, ruthenium and rhenium. In a particularly preferred embodiment, the metal is selected from Cu, Fe, V, Ce and Mn. In a most preferred embodiment, the metal is copper or iron, preferably copper. An advantage of using copper loaded zeolites is that such formulations have excellent low temperature NOₓ reduction activity (e.g. it may be superior to the low temperature NOₓ reduction activity of an iron exchanged zeolite). In a metal-loaded zeolite, the loaded metal is a type of "extra-framework metal", that is, a metal that resides within the zeolite and/or on at least a portion of the zeolite surface and does not include atoms constituting the framework of the zeolite.

In an embodiment of the invention, it is preferred to have a Cu-loaded or Fe-loaded zeolite, more preferably a metal loaded zeolite which is Cu-CHA or a Cu-AEI.

In an embodiment, the metal content of the metal-loaded zeolite is in the range of 1 to 10 wt%, preferably from 2 to 5wt% based on the weight of the zeolite.

In an embodiment of the invention the silica-alumina binder has a silica to alumina ratio of from about 1:99 to about 50:50, preferably from about 2:98 to about 45:55, e.g., from 3:97 to 40:60 or 4:96 to 35:65. More preferably the silica-alumina binder has a silica to alumina ratio of from about 2:98 to about 10:90 or from about 25:75 to about 35:65.

In an embodiment of the invention, the titania-alumina binder has a titania to alumina ratio of from about 2:98 to about 30:70, preferably from about 3:97 to about 20:80, more preferably from about 5:95 to about 15:85, e.g. about 5:95, about 10:90, about 15:85, about 20:80 or about 30:70.

In an embodiment of the invention, when a titania-alumina binder is used, titania is present in an amount from 0.1 to 2 wt%, based on the total weight of the catalyst, e.g. from 0.2 to 1.5 wt%, from 0.3 to 1.0wt%, from 0.18 to 0.9 wt%, e.g., about 0.5 wt%.

In an embodiment of the invention, the silica-alumina binder is present in an amount of 5 to 20 wt%, e.g. from 8-15 wt%, preferably from 10-12 wt% based on the total weight of the metal-loaded zeolite. In some embodiments, the silica-alumina binder is present in an amount of 5-15 wt%, 6-12wt% or 7-10wt% based on the total weight of the metal-loaded zeolite. In a particularly preferred embodiment, the silica-alumina binder is present in an amount of 5-12 wt%, more preferably from 6 to 10 wt% based on the total weight of the metal-loaded zeolite.

In an embodiment of the invention, the titania-alumina binder is present in an amount of 5 to 20 wt%, e.g. from 8-15 wt%, preferably from 10-12 wt% based on the total weight of the metal-loaded zeolite. In some embodiments, the titania-alumina binder is present in an amount of 5-15 wt%, 6-12wt% or 7-10wt% based on the total weight of the metal-loaded zeolite. In a particularly preferred embodiment, the titania-alumina binder is present in an amount of 5-12 wt%, more preferably from 6 to 10 wt% based on the total weight of the metal-loaded zeolite.

In an embodiment of the invention, the silica-alumina binder has a mean particle size in the range of 20 to 40 µm, preferably from 25 to 30 µm. In an alternative embodiment, the silica-alumina binder has a mean particle size in the range of from 4 to 8 µm , preferably from 5 to 6 µm.

Without wishing to be bound by theory it is believed that the use of a silica-alumina or titania-alumina binder provides enhanced structural stability such that on sulfation at high temperatures there is less of a loss of surface area and porosity which would otherwise occur with alumina, which has more basic sites and is more reactive to SOₓ.

In an alternate embodiment of the invention, the catalyst may include an additional binder, e.g. metal oxides such as alumina, titania, silica, zirconia, ceria. In a preferred embodiment, the catalyst further comprises an alumina binder, e.g., a boehmite binder. In some embodiments, the catalyst includes an additional binder in an amount of from 3-15 wt%, based on the total weight of the metal-loaded zeolite. For example, the catalyst includes an additional binder in an amount from 4-10 wt% or 5-8 wt% based on the total weight of the metal-loaded zeolite. In a particularly preferred embodiment, the catalyst includes an alumina binder in an amount from 3 to 15 wt%, e.g., from 4 to 8 wt% based on the total weight of the metal-loaded zeolite.

In one embodiment, the invention relates to a catalyst (e.g., a catalyst for treating an exhaust gas comprising NOx) comprising, consisting essentially of or consisting of:
1. a metal-loaded zeolite, as described herein,
2. a silica-alumina or titania-alumina binder, as described herein, and optionally
3. an additional binder (e.g., an additional alumina binder), as described herein.

According to a second aspect of the invention, there is provided a method of improving the durability of an SCR catalyst, said method comprising providing a catalyst as hereinbefore described.

In a third aspect of the invention, there is provided a method of improving NOₓ conversion activity of an SCR catalyst (e.g., by at least 10% compared to the activity of an SCR catalyst with no silica-alumina or titania-alumina binder) after aging with sulfur.

According to a fourth aspect of the invention there is provided a method for improving the durability of an SCR catalyst tolerance to sulfur, said method comprising providing a catalyst as hereinbefore described.

### EXAMPLES

### Example 1 - general preparation method

The Cu catalysts were prepared using the following methods:
- *Incipient wetness impregnation (IWI) with different salts.* A metal salt solution using the metal salt (e.g. copper acetate) in H₂O was prepared and then added dropwise to the zeolite sample and homogenously mixed until a wet sand appearance is observed.
- *Washcoat method (WC) for preparation of zeolite and binders.* Water and 30% solids (zeolite+binder) were mixed and stirred for 2 hours. The binder was 12.5% of total weight of the zeolite.

After preparation the samples were dried for 2 hours at 105ºC in static oven. Once the powders have been dried, they are activated in an oven with ramp of 10ºC/min up to 500ºC for 2 hours in air.

The catalysts prepared are as follows:
Catalyst A is where the silica-alumina binder has a SiO₂:Al₂O₃ of 2:98
Catalyst B is where the silica-alumina binder has a SiO₂:Al₂O₃ of 5:95
Catalyst C is where the silica-alumina binder has a SiO₂:Al₂O₃ of 30:70, particle size 5.4 µm
Catalyst D is where the silica-alumina binder is SiO₂:Al₂O₃ of 28:72, particle size 5.7 µm
Catalyst E is where the silica-alumina binder is SiO₂:Al₂O₃ of 27:73, particle size 27.3 µm
Catalyst F is where the binder is pure alumina
Catalyst G is where the binder is 40% SiO₂ in water
Catalyst H is where the binder is powder SiO₂
Catalyst I is where the titania-alumina binder is TiO₂:Al₂O₃ of 10:90
Catalyst J is where the titania-alumina binder is TiO₂:Al₂O₃ of 20:80
Catalyst K is where the titania-alumina binder is TiO₂:Al₂O₃ of 30:70

### Example 2 - SCAT data generation (powder)

The powder catalysts were pelletised and tested fresh or aged using transient testing protocol (SV=60K/h) the samples were heated to 150°C and exposed to 500 ppm NOx, 550 ppm NH₃, 10 %O₂, 10 % H₂O, balance N₂. The temperature was ramped at 5°C/min to 550°C.

### Short sulfation (SO₂ and SO₃)

Catalysts were Sulfur aged under several conditions in 6-way ager (flow through) (6WA) explained below: 1 g catalyst was exposed to 2L/min air, 10 ppm SO₂ and 10% H₂O (61 mgS/gcat) at constant temperature of 350 C for 72h (equal to 7gS/L). The feed consists of SO₂ but Pt/alumina is used as top layer to convert SO₂ to SO₃ (~60% Conversion).

### Regeneration procedure

After sulfation the catalysts were exposed to thermal and reactive regeneration to facilitate S removal using SCAT rig after the transient test the catalyst was kept at 550C in 10 % O₂ for 30 min, balance N₂. After the regeneration the catalyst was then brought back to 150°C and tested again with the protocol described above.

### Results

**Table 1 - NOx conversion of powder testing**

| **Catalyst** | **NOx conversion at 200°C (%) -fresh** | **NOx conversion at 200°C (%) - after sulfation** | **NOx conversion at 200°C (%) - after regeneration** | **NOx conversion at 500°C (%) -fresh** | **NOx conversion at 500°C (%) - after sulfation** | **NOx conversion at 500°C (%) - after regeneration** |
|---|---|---|---|---|---|---|
| Cu-zeolite | 83.5 | 13.6 | 63.9 | 84.8 | 91.5 | 90.1 |
| A | 78.2 | 13.7 | 55.2 | 85.3 | 82.9 | 79.7 |
| B | 79.7 | 13.7 | 51.1 | 84.5 | 81.8 | 81.6 |
| C | 79.1 | 13.5 | 51.7 | 86.1 | 85.1 | 83.1 |
| D | 77.9 | 13.4 | 53.8 | 86.1 | 84.5 | 83.1 |
| E | 78.1 | 20.2 | 66.0 | 85.4 | 84.1 | 82.1 |
| F | 73.2 | 11.8 | 40.6 | 89.5 | 88.3 | 85.7 |
| G | 75.2 | 12.6 | 52.3 | 84.1 | 83.1 | 79.6 |
| H | 76.9 | 16.1 | 55.5 | 85.1 | 81.4 | 80.1 |
| I | 88.3 | 43.7 | 84.1 | 86.2 | 87.5 | 85.1 |
| J | 90.2 | 62.1 | 83.1 | 86.6 | 88.5 | 87.2 |
| K | 83.4 | 16.9 | 67.3 | | 90.2 | 89.1 |

**Table 2 - N₂O make of powder testing**

| **Catalyst** | **N₂O make at 200°C (ppm) - fresh** | **N₂O make at 200°C (ppm) - after sulfation** | **N₂O make at 200°C (ppm) - after regeneration** | **N₂O make at 500°C (ppm) - fresh** | **N₂O make at 500°C (ppm) - after sulfation** | **N₂O make at 500°C (ppm) - after regeneration** |
|---|---|---|---|---|---|---|
| Cu-zeolite | 11.4 | 0.8 | 3.4 | 5.2 | 3.1 | 3.2 |
| A | 10.1 | 0.6 | 4.0 | 4.2 | 4.8 | 5.2 |
| B | 10.1 | 0.6 | 4.2 | 4.7 | 4.9 | 5.1 |
| C | 9.8 | 0.6 | 3.3 | 4.3 | 4.9 | 4.9 |
| D | 9.6 | 0.6 | 3.1 | 4.2 | 4.8 | 5.1 |
| E | 9.7 | 0.8 | 6.2 | 4.2 | 4.8 | 5.1 |
| F | 8.2 | 0.6 | 2.8 | 3.7 | 4.2 | 4.6 |
| G | 10.9 | 0.6 | 3.9 | 5.1 | 5.2 | 5.8 |
| H | 10.0 | 0.6 | 4.4 | 4.7 | 5.4 | 5.7 |
| I | 10.8 | 4.6 | 8.4 | 4.1 | 4.3 | 4.3 |
| J | 10.7 | 2.6 | 6.1 | 3.9 | 4.3 | 4.2 |
| K | 8.4 | 0.9 | 4.1 | | 3.9 | 3.9 |

For the fresh activity, the data shows that there is lower low temperature activity but higher high temperature activity for Catalyst F (with an Al-binder); and very similar activity for all of the catalysts with silica-alumina binders (Catalysts A-E). However, the activity of the Cu-zeolite without binder is about 3% better. After sulfation, there is a significant decrease in the activity, but a similar trend is observed for all catalysts. Catalyst E showed the highest activity compared to all other formulations. After regeneration, there is recovery in the activity and significant improvement when silica-alumina binders (Catalysts A-E) are used compared to Alumina (Catalyst F). There is an improvement of about 30%. The formulation with Catalyst E matches the activity of the Cu-only zeolite after regeneration. In most of the formulations investigated the high temperature activity is almost completely recovered.

For the fresh activity, the highest N₂O formation is observed for the Cu-zeolite without binder and the catalyst containing a pure silica binder. No difference is observed between the N₂O release for catalysts with Silica-alumina binders (Catalysts A-E). The lowest amount of N₂O is produced by the catalyst with Alumina binder (Catalyst F). After sulfation, the N₂O is decreased is very similar between all formulations. The highest amount of N₂O is produced by Catalyst B. After regeneration, there is slight increase in the N₂O, but still lower that the fresh. N₂O release is very similar between all formulations.

### Example 3 - SCAT data generation (coated)

A flow-through honeycomb core (4.66 inches by 3.0 inches, 400 cpsi, 4 mil wall thickness) was coated with a catalyst from both inlet and outlet and coated approximately 50% respectively. The catalyst comprised copper ion-exchanged aluminosilicate zeolite CHA and a silica-alumina binder washcoat. This washcoat was coated over the substrate so that the substrate was completely covered and was dried and calcined.

1x3" cores were cut from the prepared catalyst of Catalyst A-E and comparative catalysts (pure silica and pure alumina) and tested fresh for NOx conversion and N₂ selectivity using a series of steady state points at increasing temperatures in 750ppm NOx, 500ppm NH3, at 60k SV.

### Sulfation

The catalysts were sulfur aged for 126 min at 300 °C with ~2g S/L_{cat} 20ppm SO₂ using a SCAT rig. Following this, the catalysts were testing using the SCAT testing described above.

### Regeneration

After sulfation the catalysts were exposed to thermal regeneration (450C for 30 min) to facilitate S removal using a SCAT rig. After the regeneration the catalyst was then tested again with the SCAT testing described above.

### Results

**Table 3 - NOx conversion and N₂O make for coated catalysts**

| **Catalyst** | **NOx conversion at 200°C (%) -fresh** | **NOx conversion at 200°C (%) - after sulfation** | **NOx conversion at 200°C (%) - after regeneration** | **N₂O make at 200°C (ppm) - fresh** | **N₂O make at 200°C (ppm) - after sulfation** | **N₂O make at 200°C (ppm) - after regeneration** |
|---|---|---|---|---|---|---|
| A | 96 | 67 | 84 | 11.4 | 1.6 | 5.4 |
| B* | 93 | 69 | 91 | 10.2 | 1.7 | 8 |
| D* | 94 | 63 | 82 | 11.1 | 1.3 | 4.4 |
| E * | 95 | 68 | 78 | 11.6 | 1.6 | 3.0 |
| F | 95 | 62 | 86 | 11.9 | 1.4 | 7.9 |
| G | 94 | 62 | 77 | 13.3 | 1.9 | 7.9 |

Table 3 shows that Catalyst B* exhibits the highest NOx conversion after regeneration, and is significantly greater than the comparative catalysts. This catalyst exhibits better sulfur tolerance than the comparative examples and other silica-alumina binders tested in this example. It is noted that Catalysts B*, D* and E* were prepared by using the silica-alumina binder blended with a pure alumina binder in a 1:1 mixture to make a total binder content of 12.5wt%.

## Claims

1. A catalyst for treating an exhaust gas comprising NOx, said catalyst comprising a metal loaded zeolite and either a silica-alumina binder or a titania-alumina binder.

2. The catalyst of claim 1, wherein the silica-alumina binder has a silica to alumina ratio of from about 1:99 to about 50:50, preferably from about 2:98 to about 45:55, e.g., from 3:97 to 40:60 or 4:96 to 35:65.

3. The catalyst of claim 2, wherein the silica-alumina binder has a silica to alumina ratio of from about 2:98 to about 10:90 or from about 25:75 to about 35:65.

4. The catalyst of any one of claims 2-3, wherein the silica-alumina binder has a mean particle size in the range of 20 to 40 µm, preferably from 25 to 30 µm.

5. The catalyst of any one of claims 2-3, wherein the silica-alumina binder has a mean particle size in the range of from 4 to 8 µm , preferably from 5 to 6 µm.

6. The catalyst of claim 1, wherein the titania-alumina binder has a titania to alumina ratio of from about 2:98 to about 20:80, preferably from about 5:95 to about 15:85, e.g. about 5:95, about 10:90 or about 15:85.

7. The catalyst of any preceding claim, wherein the catalyst further comprises an alumina binder.

8. The catalyst of any preceding claim, wherein the silica-alumina binder or titania-alumina binder is in an amount of 5-15 wt%, preferably from 6-12 wt% based on the total weight of the metal-loaded zeolite.

9. The catalyst of any preceding claim, wherein the metal loaded zeolite has a metal selected from the group consisting of Cu, Fe, V, Ce and Mn.

10. The catalyst of any preceding claim, wherein the metal loaded zeolite is a Cu zeolite.

11. The catalyst of any preceding claim, wherein the zeolite is a zeolite with a framework selected from AEI, AFX, CHA, DDR, ERI, ITE, KFI, LEV, SFW, BEA, MFI and FER, and mixtures and/or intergrowths thereof, preferably wherein the zeolite is a zeolite with a framework selected from AEI and CHA.

12. The catalyst of any preceding claim, wherein the zeolite has a silica-to-alumina ratio of 10 to 30, preferably from 13 to 25.

13. A method of improving the durability of an SCR catalyst, said method comprising providing a catalyst as claimed in any preceding claim.

14. A method of claim 13, wherein the NOx conversion activity of SCR is improved by at least 10% after aging with sulfur.

15. A method of claim 13 or 14, wherein the method of improving the durability of an SCR catalyst is a method of improving the tolerance of the SCR catalyst to sulfur.
